# EUROPÄISCHE PATENTSCHRIFT

(11) **EP 1 938 241 B1**
(45) Veröffentlichungstag und Bekanntmachung des Hinweises auf die Patenterteilung: **25.11.2009**
(21) Anmeldenummer: 06791376.4
(22) Anmeldetag: 12.09.2006
(51) Int. Cl.: G06K 7/00, H04L 5/16, G01P 13/02, G01V 3/08, G01R 31/317, G08C 15/06

(54) **VORRICHTUNG ZUR ERKENNUNG DER DATENÜBERTRAGUNGSRICHTUNG ZWISCHEN KOMMUNIKATIONSPARTNERN**
DEVICE FOR RECOGNISING THE DIRECTION OF DATA TRANSMISSION BETWEEN COMMUNICATION PARAMETERS
DISPOSITIF DE DETECTION DU SENS DE TRANSMISSION DES DONNEES ENTRE DES PARTENAIRES DE COMMUNICATION

(30) Priorität: 19.10.2005 DE 102005050457
(43) Veröffentlichungstag der Anmeldung: 02.07.2008
(73) Patentinhaber: Comprion GmbH, 33100 Paderborn (DE)
(72) Erfinder: HERMANN, Wilfried, 33154 Salzkotten (DE)
(74) Vertreter: Ostermann, Thomas
(86) Internationale Anmeldenummer: PCT/DE2006/001607
(87) Internationale Veröffentlichungsnummer: WO 2007/045196

(56) Entgegenhaltungen:
- DE-A1- 19 725 917
- DE-C1- 10 025 086

## Beschreibung

Die Erfindung betrifft eine Vorrichtung zur Erkennung der Datenübertragungsrichtung zwischen zwei Kommunikationseinheitennach dem Oberbegriff des Patentanspruchs 1.

Aus der DE 100 25 086 C1 ist eine Vorrichtung zur Erkennung der Datenübertragungsrichtung zwischen einem Datenträger und einer Datenträgerleseeinheit bekannt, die über eine Messschaltung verfügt. Die Messschaltung ist zwischen dem Eingangs-/Ausgangs-Anschluss (I/O-Anschluss) des Datenträgers und dem Eingangs-/Ausgangs-Anschluss (I/O-Anschluß) der Datenträgerleseeinheit, die mittels einer Verbindungsleitung (I/O-Leitung) miteinander verbunden sind, angeordnet. Die Messschaltung ist nach Art einer Brückenschaltung aufgebaut, wobei zwei Spannungsabfälle an unterschiedlichen Messpunkten gemessen und über Komparatorschaltungen miteinander verglichen werden. Durch Vergleich der gemessenen Spannungsabfälle bezogen auf einen vorgegebenen Schwellwert kann festgestellt werden, ob der Datenträger oder die Datenträgerleseeinheit als Kommunikationspartner sendet bzw. empfängt. Nachteilig an der bekannten Vorrichtung ist, dass der zur Auswertung benutzte Spannungsabfall eine Potenzialverschiebung verursacht. Weiterhin wird je nach Höhe des Widerstandswertes des Messwiderstandes das Kommunikationssignal zeitlich beeinflusst. Ferner ist diese Messschaltung empfindlich gegen Widerstandstoleranzen im Brückenzweig, da diese bereits im Ruhezustand der Schaltung zu einer Gleichspannungsaussteuerung der Komparatorschaltung führt. Ein weiterer wesentlicher Nachteil ist darin zu sehen, dass die Funktion der Messschaltung stark abhängig von dem Pull-Up-Widerstand zwischen dem I/O-Anschluss und dem Versorgungsanschluss (VCC) ist. Dieser Pull-UP-Widerstand bestimmt den Messstrom und beeinflusst somit im Wesentlichen den Spannungsabfall über den Messwiderstand. Ist der Pull-Up-Widerstand hochohmig, verringert sich der Spannungsabfall am Messwiderstand, so dass eine Richtungserkennung unter Umständen nicht möglich ist.

Aufgabe der vorliegenden Erfindung ist es daher, eine Vorrichtung zur Erkennung der Datenübertragungsrichtung zwischen einem Datenträger und einer Datenträgerleseeinheit derart weiterzubilden, dass die oben beschriebenen Nachteile beseitigt werden und eine sichere Richtungserkennung ermöglicht wird.

Zur Lösung dieser Aufgabe weist die Erfindung die Merkmale des Patentanspruchs 1 auf.

Der besondere Vorteil der Erfindung besteht darin, dass durch Erzeugung einer Stromspitze zusammen mit dem logischen Pegelwechsel auf der I/O-Leitung eindeutig und sicher die Datentransfer-Richtung bzw. Kommunikationsrichtung bestimmt werden kann. Die Polarität der Schaltspitze ist bei einem Pegelwechsel davon abhängig, welche der Kommunikationseinheiten den Wechsel hervorgerufen hat. Hierdurch ergibt sich ein unmittelbarer zeitlicher Bezug der Ausbildung der Schaltspitze zu dem Umschaltvorgang, dessen Lokalisierung durch die Auswerteschaltung erkannt wird. Schwankungen der Messparameter können daher nicht das Messergebnis verfälschen. Grundgedanke der Erfindung ist es, eine Messschaltung derart auszubilden, dass anhand eines eindeutig abgegrenzten Spitzenwertes die Datenübertragungsrichtung festgestellt werden kann. Durch vorzugsweise die Polarität des Spitzenwertes (positiv oder negativ) kann die Datenübertragungsrichtung in die eine oder andere Richtung erkannt werden.

Nach einer Weiterbildung der Erfindung ist die Strom- und/oder Spannungsspitze als eine Schaltspitze ausgebildet, die sich unmittelbar nach dem Umschaltvorgang einstellt. Die Polarität der Schaltspitze ist davon abhängig, ob die Spannung an dem I/O-Anschluss des Datenträgers oder der Datenträgerleseeinheit von dem High-Zustand in den Low-Zustand gebracht worden ist. Hierdurch ergibt sich ein unmittelbarer zeitlicher Bezug der Ausbildung der Schaltspitze zu dem Umschaltvorgang, dessen Lokalisierung durch die Messschaltung erkannt wird.

Weitere Vorteile der Erfindung ergeben sich aus den weiteren Unteransprüchen.

Ein Ausführungsbeispiel der Erfindung ist nachfolgend anhand der Zeichnungen näher erläutert.

Es zeigen:
- Figur 1: einen Schaltplan einer erfindungsgemäßen Mess- schaltung und
- Figur 2: ein Spannungs-/Strom-Zeitdiagramm.

Eine erfindungsgemäße Vorrichtung zur Erkennung der Datenübertragungsrichtung zwischen zwei Kommunikationseinheiten kann zur Erkennung der Datenübertragungsrichtung zwischen einem Datenträger 1 und einer Datenträgerleseeinheit 2 eingesetzt werden. Sie ist vorzugsweise Bestandteil eines Messtools für Mobilfunktelefone bzw. SIM-Karten. Der Datenträger 1 ist als SIM-Karte und die Datenträgerleseeinheit 2 als Kartenleseeinheit eines Mobiltelefons ausgebildet. Die erfindungsgemäße Vorrichtung ermöglicht die Feststellung, ob auf einer die SIM-Karte 1 mit dem Mobiltelefon 2 verbindenden Kommunikationsleitung (I/O-Leitung) ein Sendesignal der SIM-Karte 1 oder ein Sendesignal des Mobiltelefon 2 anliegt. Die Kommunikationsleitung 3 ist jeweils endseitig an einem Eingangs-/Ausgangsanschluss (I/O-Anschluss) 4 der SIM-Karte 1 und an einem Eingangs-/Ausgangsanschluss (I/O-Anschluss) 5 des Mobiltelefons 2 angeschlossen ist. Ein Masseanschluss 6 der SIM-Karte 1 ist direkt mit einem Masseanschluss 7 des Mobiltelefons 2 verbunden.

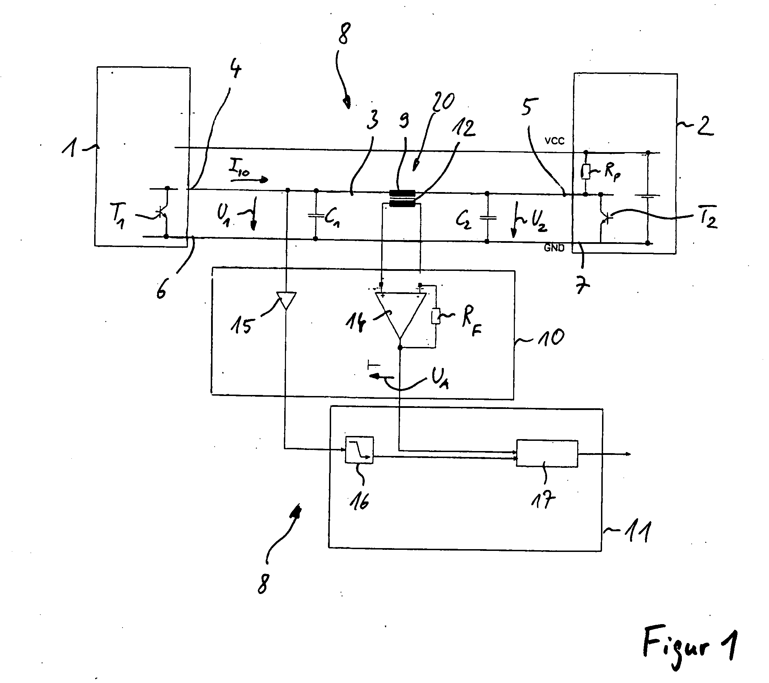

Zwischen dem I/O-Anschluss 5 des Mobiltelefons 2 und der Versorgungsspannung VCC ist ein Pull-Up-Widerstand R_{P} angeordnet. Bezogen auf den Masseanschluss 7 entstehen auf Grund der physikalischen Ausdehnung der SIM-Karte 1 und des Mobiltelefons 2 auf der Kommunikationsleitung 3 parasitäre Kapazitäten, die in der Figur 1 durch zwei Kondensatoren C₁, C₂ zwischen der Kommunikationsleitung 3 und der Masseleitung 6, 7 symbolisiert ist. Die Kapazitäten können in einem Bereich zwischen 10 pF und 30 pF liegen. Durch den Pull-Up-Widerstand R_{P} werden die Kapazitäten C₁,C₂ im Ruhezustand wieder aufgeladen. Bei Schalten eines Transistors T₂ des Mobiltelefons 2 werden beide Kapazitäten C₁, C₂ entladen, wobei der Entladestrom von der Kapazität C₁ einen negativen Strom I_{I/O} durch eine Messschaltung 8 fließen lässt. Wird der Transistor T₁ der SIM-Karte 1 eingeschaltet wird der Kondensator C₂ über die Messschaltung 8 mit einem positiven Strom I_{I/O} entladen. Zusätzlich fließt noch der durch den Pull-Up-Widerstand R_{P} generierte Strom durch die Messschaltung 8. Maßgeblich für die Richtungserkennung ist die Richtung der Stromflussspitze durch die Messschaltung 8.

Die Messschaltung 8 besteht im Wesentlichen aus einem zwischen den I/O-Anschlüssen 4 und 5 angeordneten Transformator 20 mit einer Primärspule 9 und einer Sekundärspule 12, mit einer sich an die Sekundärspule 12 des Transformators 12 anschließenden Signalaufbereitungseinheit 10 und einer der Signalaufbereitungseinheit 10 nachgeordneten Auswerteeinheit 11.

Die Signalaufbereitungseinheit 10 weist einen Messverstärker 14 und einen an den negativen Anschluss des Messverstärkers 14 und dem Ausgang des Messverstärkers 14 angeschlossenen Widerstand R_{F} auf. Am Ausgang der Signalaufbereitungseinheit 10 liegt eine Spannung U_{A} an, die eine Eingangsgröße der Auswerteeinheit bildet.

Die Auswerteeinheit 11 umfasst zum einen einen Messverstärker 15, an dessen Eingang die Spannung U₁ an der Kommunikationsleitung 3 anliegt. Ein dem Messverstärker 15 nachgeschalteter Flankendetektor 16 der Auswerteeinheit 11 detektiert eine fallende Flanke der Signalspannungen U₁, U₂ an der Kommunikationsleitung 3 und legt damit den Zeitpunkt zur Richtungserkennung fest. Ansteigende Flanken der Signalspannungen U₁, U₂ werden nicht bei der Richtungserkennung berücksichtigt. Weiterhin weist die Auswerteeinheit 11 eine Komparatorschaltung 17 auf, die beispielsweise zwei Komparatoren enthalten kann. An dem Eingang der Komparatorschaltung 17 liegt ferner die Ausgangsspannung U_{A} der Signalaufbereitungseinheit 10 an. Das Überschreiten eines Schwellenwertes bzw. das Unterschreiten eines weiteren Schwellenwertes durch das Ausgangssignal U_{A} kann durch die Komparatorschaltung 17 detektiert werden. Am Ausgang der Auswerteeinheit 11 liegt ein Richtungssignal U_{R} an, das in Abhängigkeit von der Übertragungsrichtung vom High-Zustand in den Low-Zustand oder umgekehrt fällt. Durch weitere logische Aufbereitung kann die Kommunikationsrichtung mittels einer nicht dargestellten Anzeigeeinheit signalisiert bzw. mittels eines nicht dargestellten Speichers abgespeichert werden.

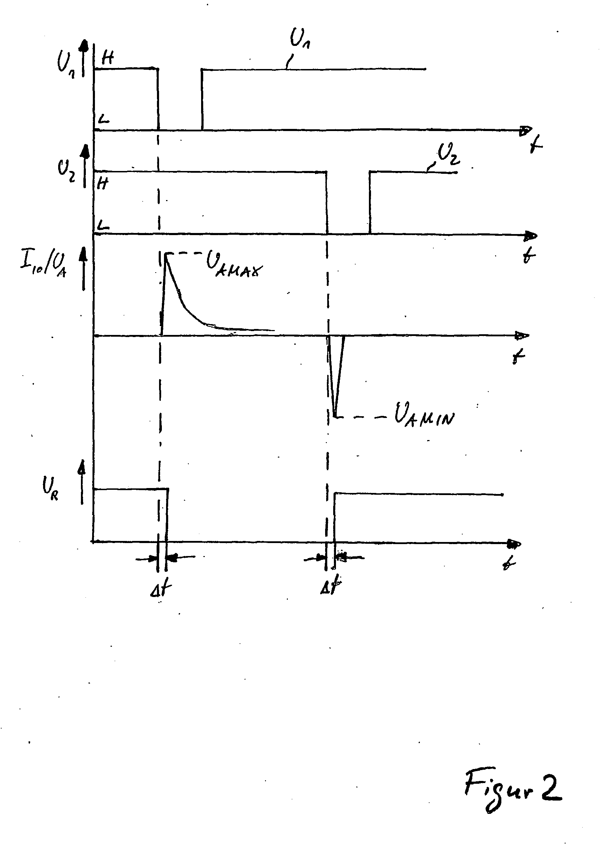

Im Folgenden wird die Funktionsweise der Messschaltung für zwei unterschiedliche Datenübertragungsrichtungen beschrieben. Im Ausgangszustand sind die Signalspannungen U₁, U₂ an der Kommunikationsleitung 3 im High-Zustand. Sendet die SIM-Karte 1 ein Signal, wird der Transistor T₁ angeschaltet, so dass die Signalspannung U₁ vom High-Zustand in den Low-Zustand fällt. Als Folge daraus steigt der Strom I_{I/O} schlagartig an, wobei er sich durch den Entladestrom der Kapazität C₂ und den durch den Pull-Up-Widerstand R_{P} durchflossenen Stromanteil zusammensetzt. In dem Transformator wird in der Sekundärspule 12 ein Sekundärstrom induziert, der in den Eingang des Messverstärkers 14 fließt. Aufgrund der Beschaltung des Messverstärkers wird der induzierte Strom durch die Ausgangsspannung U_{A} über R_{F} kompensiert. Die Ausgangsspannung U_{A} des Messverstärkers 14 hat den gleichen Verlauf wie die Stromstärke I_{I/O}, weist jedoch ein Niveau auf, das an die Auswerteeinheit 11 angepasst ist. Wie sich aus Figur 2 ergibt, entsteht ein Maximalwert U_{Amax} der an dem Eingang der Komparatorschaltung 17 anliegt. Durch Vergleich mit einem vorgegebenen Schwellwert verringert sich ein Richtungsspannungswert U_{R} am Ausgang der Komparatorschaltung 17 von dem High-Zustand in den Low-Zustand. Der Low-Zustand von dem Richtungserkennungssignal U_{R} erfolgt nach einem Zeitintervall d_{T} nach dem Schaltvorgang des Transistors T₁. Das Zeitintervall d_{T} legt den zeitlichen Abstand zwischen dem Schaltzeitpunkt des Transistors T₁ und dem Maximalwert U_{Amax} der Ausgangsspannung U_{A} des Verstärkers 14 fest.

Erfolgt auf Grund der Ansteuerung des Transistors T₂ ein Sendevorgang des Mobilfunkgerätes 2, fließt ein im Vergleich zum vorhergehenden Fall umgekehrter Strom I_{I/O}. Da kein Widerstand in Reihe liegt, erfolgt sowohl ein schlagartiger Anstieg als auch ein schlagartiger Abfall der Stromstärke I_{I/O} in negativer Richtung. Mittels des Transformators 20 erfolgt in gleicher Weise eine Übertragung des durch die Primärspule 9 fließenden Stroms an den Eingang des Messverstärkers 14. Das Ausgangssignal U_{A} des Messverstärkers 14 weist den gleichen Verlauf auf wie die Stromstärke I₀. Dadurch, dass ein Minimalwert U_{Amin} mit entgegengesetzter Polarität im Vergleich zu dem anderen Sendevorgang sich einstellt, wird ein Richtungsspannungswert U_{R} erzeugt, der von einem Low-Zustand in einen High-Zustand versetzt wird. Dies erfolgt in gleicher Weise mit einer Zeitverzögerung von d_{T} nach dem Einschalten des Transistors T₂.

Wie besser aus Figur 2 zu ersehen ist, bedeutet eine negative Flanke des Richtungserkennungssignals U_{R} ein Senden der SIM-Karte 1, eine positive Flanke des Signals U_{R} ein Senden des Mobiltelefons 2.

Vorteilhaft ist die erfindungsgemäße Messschaltung 8 unabhängig von dem Pull-Up-Widerstand R_{P}. Maßgeblich für die Spannungs- bzw. Stromspitzen sind die parasitären Kapazitäten C₁, C₂. Die Messschaltung 8 eignet sich insbesondere auch für Mobiltelefone mit einem relativ hoch ohmigen Pull-Up-Widerstand R_{P}, der zur Minimierung der Stromaufnahme des Mobiltelefons dient.

Vorteilhaft ist nach der erfindungsgemäßen Messschaltung lediglich erforderlich, dass die Kommunikationsleitung 3 durch einen Transformatorkern hindurch geleitet werden muss. Es sind keine zusätzlichen Bauteile an der Kommunikationsleitung 3 anzubringen.

Vorzugsweise besteht die Primärwicklung 9 des Transformators 20 nur aus einer bzw. einer halben Windung. Die Kommunikationsleitung 3 wird somit nur mit einer relativ kleinen Kapazität belastet. Weiterhin treten durch die Messschaltung 8 keine nennenswerten Spannungsabfälle an der Kommunikationsleitung 3 auf, die zu Signal- und Kommunikationsstörungen führen könnten.

## Patentansprüche

1. vorrichtung zur Erkennung der Datenübertragungsrichtung zwischen zwei Kommunikationseinheiten,
wobei die Vorrichtung eine Messschaltung (8) enthält, die
einer die kommunikationseinheiten (1,2) verbindenden Kommunikationsleitung zugeordnet ist,
**dadurch gekennzeichnet, dass**
die Messschaltung (8) einen Transformator (20) umfasst, dessen Primärspule (9) zwischen den Eingangs-/Ausgangsanschlüssen (4, 5) der Kommunikationseinheiten (1, 2) angeordnet ist
und dass in der Messschaltung (8) eine Signalaufbereitungseinheit (10) mit einem Messverstärker (14) vorgesehen ist, an dessen Eingang die Sekundärspule (12) des Transformators (20) angeschlossen ist und der ein Stromsignal in ein Spannungssignal umwandelt,
wobei die Messschaltung (8) derart aufgebaut ist, dass beim Umschalten eines Eingangs-/Ausgangsanschlusses (4, 5) einer der Kommunikationseinheiten (1, 2) von einem logischen Zustand in einen anderen logischen Zustand eine Stromspitze (U_{Amax}, U_{Amin}) erzeugt wird,
und dass die Signalaufbereitungseinheit (10) einen mit der Kommunikationsleitung (3) verbundenen Messverstärker (15) und einen Flankendetektor (16) aufweist, der eine fallende Flanke der Signalspannung (U₁, U₂) der Kommunikationsleitung (3) detektiert,
so dass mittels einer Auswerteeinheit (11) in Abhängigkeit von dem Ausgangssignal des Flankendetektors (16) die Polarität der Stromspitze (U_{Amax}, U_{Amin}) ermittelt wird.

2. Vorrichtung nach Anspruch 1, **dadurch gekennzeichnet, dass** die Polarität der Stromspitze (U_{Amax}, U_{Amin}) abhängig von der Richtung der Datenübertragung ist.

3. Vorrichtung nach Anspruch 1 oder 2, **dadurch gekennzeichnet, dass** die Stromspitze (U_{Amax}, U_{Amin}) als eine Schaltspitze ausgebildet ist, die unmittelbar nach dem Umschaltvorgang entsteht.

4. Vorrichtung nach einem der Ansprüche 1 bis 3, **dadurch gekennzeichnet, dass** der Signalaufbereitungseinheit (10) eine Auswerteeinheit (11) nachgeordnet ist, in der ein Spannungsausgangswert (U_{A}) der Signalaufbereitungseinheit (10) weiterverarbeitet wird, so dass in Abhängigkeit der Polarität des Spannungswertes (U_{R}) die Richtung der Datenübertragung signalisierbar ist.

5. Vorrichtung nach einem der Ansprüche 1 bis 4, **dadurch gekennzeichnet, dass** als Kommunikationseinheiten ein Datenträger (1) und eine Datenträgerleseeinheit (2) ausgebildet sind, die über die Kommunikationsleitung (3) und einer Masseleitung miteinander verbindbar sind.

6. Vorrichtung nach Anspruch 5, **dadurch gekennzeichnet, dass** die Auswerteeinheit (11) mindestens einen Komparator aufweist, mittels dessen die Polarität der Ausgangsspannung (U_{A}) des Messverstärkers (14) zum mittels des Flankendetektors (16) vorgegebenen Zeitpunkt ermittelbar ist.

## Claims

1. Device for recognizing the direction of data transmission between two communication parameters wherein said device comprises a measuring circuit arrangement (8) which is allocated to a communication line that connects the communication parameters (1, 2), **characterized by** the fact that said measuring circuit arrangement (8) comprises a transformer (20) whose primary coil (9) is disposed between input/output connections (4, 5) of the communication parameters (1, 2) and that said measuring circuit arrangement (8) includes a signal processing unit (10) with a measuring amplifier (14) to the input side of which the secondary coil (12) of the transformer (20) is connected and which transforms a current signal into a voltage signal wherein the measuring circuit arrangement (8) is made up such that a current peak (U_{AMAX}, U_{AMIN}) is generated whenever an input/output connection (4, 5) of the communication parameters is changed over from one logic state to another, and that the signal processing unit (10) comprises a measuring amplifier (15) in connection with the communication line (3) and a signal edge detector (16) which is adapted to detect a negative edge of a signal voltage (U₁, U₂) of the communication line (3) such that the polarity of the current peak (U_{AMAX}, U_{AMIN}) is by means of an evaluator unit (11) determined as a function of the output signal of the edge detector (16).

2. Device according to Claim 1, **characterized by** the fact that the polarity of the current peak (U_{AMAX}, U_{AMIN}) is dependent on the direction of data transmission.

3. Device according to Claim 1 or 2, **characterized by** the fact that the current peak (U_{AMAX}, U_{AMIN}) is in the form of a switching peak that occurs right after a changeover.

4. Device according to any of the preceding Claims 1 to 3, **characterized by** the fact that an evaluator unit (11) is arranged downstream the signal processing unit (10) for an output voltage value (U_{A}) from the signal processing unit (10) to be processed further in such a way that the direction of data transmission may be signalized as a function of the polarity of a voltage value (U_{R}).

5. Device according to any of the preceding Claims 1 to 4, **characterized by** the fact that the communication units are a data carrier (1) and a data carrier reading unit (2) which are connectable via the communication line (3) and a ground line.

6. Device according to Claim 5, **characterized by** the fact that the evaluator unit (11) comprises at least one comparator by means of which the polarity of the output voltage (U_{A}) of the measuring amplifier (14) may be determined at a time as predetermined by the edge detector (16).

## Revendications

1. Dispositif de détection de la direction de transmission de données entre deux unités de communication,
ledit dispositif comprenant un circuit de mesure (8), qui est associé à une ligne de communication qui relie lesdites unités de communication,
**caractérisé en ce que**
le circuit de mesure (8) comprend un transformateur (20), dont la bobine primaire (9) est disposée entre des raccords d'entrée / de sortie (4, 5) des unités de communication (1, 2),
et **en ce que**, dans le circuit de mesure (8), est prévue une unité de traitement de signaux (10) avec un amplificateur de mesure (14), à l'entrée duquel est raccordée la bobine secondaire (12) du transformateur (20), et qui transforme un signal de courant en un signal de tension,
le circuit de mesure (8) étant constitué de sorte que, lors de la commutation d'un raccord d'entrée / de sortie (4, 5) de l'une des unités de communication (1, 2) d'un état logique à un autre état logique, une pointe de courant (U_{Amax},U_{Amin}) est générée
et **en ce que** l'unité de traitement de signaux (10) présente un amplificateur de mesure (15), qui est relié à la ligne de communication, et un détecteur de flancs (16), qui détecte un flanc descendant de la tension de signal (U₁, U₂) de la ligne de communication (3),
de sorte que la polarité de la pointe de courant (U_{Amax}/U_{Amin}) puisse être déterminée en fonction du signal de sortie du détecteur de flancs (16).

2. Dispositif selon la revendication 1, **caractérisé en ce que** la polarité de la pointe de courant (U_{Amax},U_{Amin}) dépend de la direction de transmission des données.

3. Dispositif selon revendication 1 ou 2, **caractérisé en ce que** la pointe de courant (U_{Amax},U_{Amin}) est formée en tant que pic de commutation, qui se produit directement après l'opération de commutation.

4. Dispositif selon l'une des revendications 1 à 3, **caractérisé en ce qu'**en aval de l'unité de traitement de signaux (10) est disposée une unité d'évaluation (11), dans laquelle une valeur de sortie de tension (U_{A}) de l'unité de traitement de signaux (10) est soumise à un post-traitement, de sorte que la direction de la transmission des données peut être signalisée en fonction de la polarité de la valeur de tension (U_{R}).

5. Dispositif selon l'une des revendications 1 à 4, **caractérisé en ce qu'**un support de données (1) et une unité de lecture de support de données (2) sont réalisés en tant qu'unités de communication.

6. Dispositif selon la revendication 5, **caractérisé en ce que** l'unité d'évaluation (11) présente au moins un comparateur, au moyen duquel la polarité de la tension de sortie (U_{A}) de l'amplificateur de mesure (14) peut être déterminée à un moment prédéfini au moyen du détecteur de flancs (16).
